Europäisches Patentamt

European Patent Office

Office européen des brevets

(11) Publication number: **0 402 854**
**A2**

## EUROPEAN PATENT APPLICATION

(21) Application number: **90111091.6**

(22) Date of filing: **12.06.90**

(51) Int. Cl.⁵: **B23B 27/16**

The title of the invention has been amended (Guidelines for Examination in the EPO, A-III, 7.3).

(30) Priority: **12.06.89 JP 68326/89 U**

(43) Date of publication of application:
**19.12.90 Bulletin 90/51**

(84) Designated Contracting States:
**DE FR GB IT SE**

(71) Applicant: **MITSUBISHI METAL CORPORATION**
**No. 5-1, Ohtemachi, 1-chome Chiyoda-ku**
**Tokyo(JP)**

(72) Inventor: **Ikenaga, Kouichi, C/o**
**Tokyo-Seisakusho**
**Mitsubishi Kinzoku K.K., 1-27-20**
**Nishishinagawa**
**Shinagawa-ku, Tokyo(JP)**
Inventor: **Arai, Tatsuo, C/o Tokyo-Seisakusho**
**Mitsubishi Kinzoku K.K., 1-27-20**
**Nishishinagawa**
**Shinagawa-ku, Tokyo(JP)**

(74) Representative: **Füchsle, Klaus, Dipl.-Ing. et al**
**Hoffmann . Eitle & Partner Patentanwälte**
**Arabellastrasse 4**
**D-8000 München 81(DE)**

(54) **Tool with clamped insert.**

(57) There is disclosed an insert clamped tool which has a tool holder including a recess formed at a forward end thereof so as to define an insert-receiving seat. The tool holder has a positioning projection integrally formed thereon so as to protrude from the insert-receiving seat and having an engaging portion at one side thereof. A cutting insert having a mounting bore formed therethrough is received on the insert-receiving seat in such a manner that the engaging portion of the positioning projection is held in abutting engagement with the mounting bore of the insert. A clamp mechanism is arranged on the tool holder for pressing the insert against the insert-receiving seat and the engaging portion of the positioning projection.

## INSERT CLAMPED TOOL

### BACKGROUND OF THE INVENTION

#### Field of the Invention

The present invention pertains to a clamped tool having a cutting insert releasably secured to a tool holder, and in particular, to the improvement in an assembly for clamping a cutting insert with a mounting bore on the tool holder.

#### Prior Art

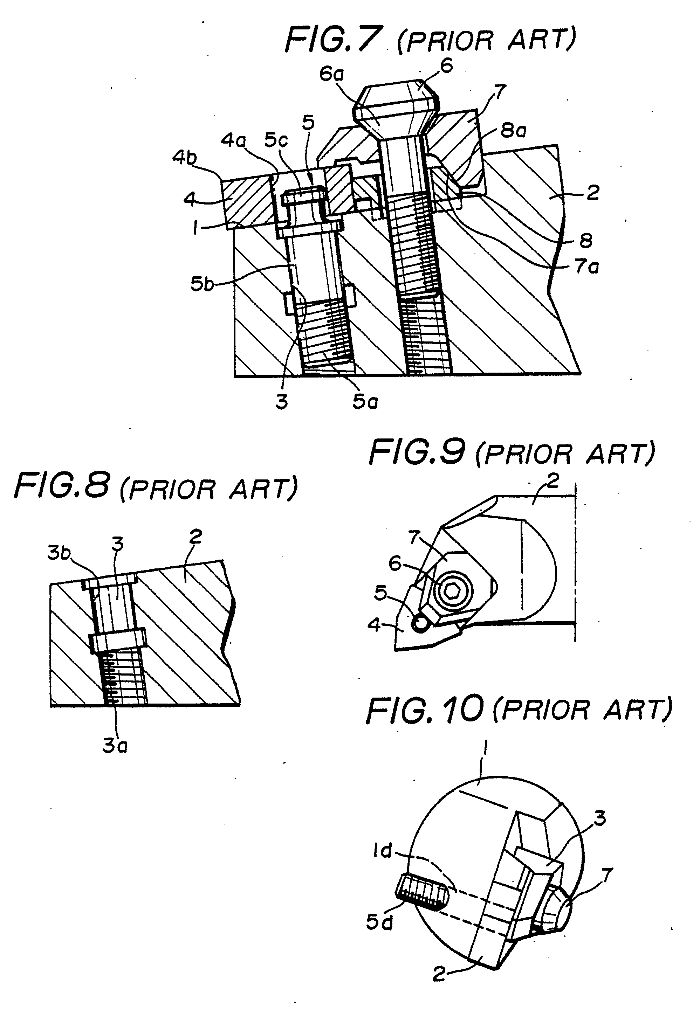

Figs. 7 to 10 depict a conventional insert clamped tool which comprises a tool holder 2 having an insert-receiving seat 1 or recess formed at its forward end and a pin-receiving hole 3 opening to the insert-receiving seat 1. A throwaway cutting insert 4 with a mounting bore 4a formed therethrough is received on the insert-receiving seat 1, and a positioning pin 5 is received in the pin-receiving hole 3 so that its head portion 5c protrudes from the seat 1 to engage with the mounting bore 4a of the insert 4. A clamp 7 is disposed at a position shifted rearward of the tool holder 2 relative to the pin 5, and a clamp plate 8 is interposed between the clamp 7 and the seat 1 with its rear wedge face 8a being held in abutment with a complementary wedge face 7a formed at a rear portion of the clamp 7. A clamp bolt 6 is screwed into the tool holder 2.

The positioning pin 5 has an externally threaded portion 5a screw-fit in an internally threaded portion 3a of the pin-receiving hole 3, an engaging pin portion 5b fit in a straight portion 3b of the pin-receiving hole 3, and an insert engaging portion 5c held in engagement with the mounting bore 4a of the insert 4. The positioning pin 5 is thus subject to the force caused from the clamp plate 8 to prevent the insert 4 from moving along the insert-receiving seat 1.

In the clamped tool described above, when the clamp bolt 6 is tightened, the insert 4 is pressed by the clamp 7 against the insert-receiving seat 1, and the clamp plate 8 is pressed forward of the tool due to a wedging effect, caused between a head 6a of the clamp bolt 6 and the clamp 7, and a wedging effect, caused between the wedge face 7a of the clamp 7 and the wedge face 8a of the clamp plate 8. Thus, the insert engaging portion 5c of the positioning pin 5 and the mounting bore 4a of the insert 4 are brought into abutting engagement with each other, so that the movement of the insert 4 along the insert-receiving seat 1 can be prevented.

In the aforesaid conventional clamped tool, positioning pins 5 of various length should be prepared in accordance with the thickness of the forward portion of the tool holder 2, wherein the positioning pins 5 are received. If the positioning pin 5 is too long for the tool holder 2, the forward end 5d of the positioning pin 5 protrudes from the bottom of the pin-receiving hole, as shown in Fig. 10. Therefore, when cutting a work piece, the protruding end 5d interferes with the work or scraps, which disturbs normal cutting operation. If the positioning pin 5 is too short for the tool holder 2, the screw-fit length of the positioning pin 5 and the pin-receiving hole 3 is also short, hence the positioning pin 5 undergoes a pressing force from the insert 4 and is caused to move within the pin-receiving hole 3. As a result, a stock of various types of positioning pins 5 are required, which raises manufacturing costs.

Another defect of aforesaid conventional clamped tool relates especially to a small size tool, which is often used to enlarge a hole of small diameter, and in which the forward portion of the tool holder 2 is formed thin, so that it can easily inserted into the hole. As the screw-fit length of the positioning pin 5 and the pin-receiving hole 3 is inevitably set short, the insert 4 is caused to move when cutting, and it is difficult to position the cutting edge 4b in place.

Furthermore, the cutting edge 4b of the insert 4 is set on the base of the surface of the insert engaging portion 5c, therefore, it is necessary to form the externally threaded portion 5a of the positioning pin 5 and the internally threaded portion 3a of the pin-receiving hole 3 with high precision, which causes high manufacturing costs.

Furthermore, in a clamped tool of an especially small size, a pin-receiving hole 3 penetrating a forward portion reduces the durability of the tool holder 2.

It is therefore an object of the present invention to provide an insert clamped tool in which the movement of the insert during clamping can be positively prevented and in which the insert is kept securely in position.

Another object of the invention is to provide an insert clamped tool in which a positioning pin 5 is unnecessary, and in which therefore a pin-receiving hole 3 in the tool holder 2 is unnecessary, whereby accurate boring is unnecessary and thus the durability of the tool holder 2 is not reduced.

### SUMMARY OF THE INVENTION

According to the present invention, there is provided a tool holder including a recess formed at a forward end thereof so as to define an insert-receiving seat and including a positioning projection formed integrally thereon so as to protrude from the insert-receiving seat, the positioning projection having an engaging portion at one side thereof; a cutting insert having a mounting bore formed therethrough and received on the insert-receiving seat in such a manner that the engaging portion of the positioning projection is held in abutting engagement with the mounting bore of the insert; and clamp means arranged on the tool holder for pressing the insert against the insert-receiving seat and the engaging portion of the positioning projection.

## BRIEF DESCRIPTION OF THE DRAWINGS

Fig. 1 is a fragmentary vertical cross-sectional view of a part of an insert clamped tool in accordance with an embodiment of the present invention;

Fig. 2 is a fragmentary horizontal view of the tool holder shown in Fig. 1;

Fig. 3 is a fragmentary vertical cross-sectional view of a part of an insert clamped tool in accordance with another embodiment of the present invention;

Fig. 4 is an enlarged vertical cross-sectional view of the positioning projection shown in Fig. 3;

Fig. 5 is an enlarged vertical cross-sectional view of the intermediate seat member shown in Fig. 3;

Fig. 6 is an enlarged horizontal view of the fixing ring shown in Fig. 3;

Fig. 7 is a view similar to Fig. 1, but showing a conventional clamped tool;

Fig. 8 is a fragmentary vertical view of the tool holder shown in Fig. 7;

Fig. 9 is a fragmentary horizontal view of the tool shown in Fig. 7;

Fig. 10 is a fragmentary bottom view of the tool shown in Fig. 7.

## DESCRIPTION OF THE PREFERRED EMBODIMENTS OF THE INVENTION

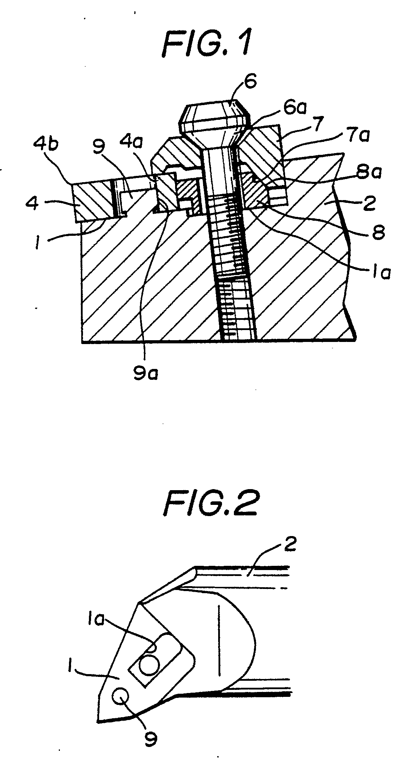

Fig. 1 and 2 depict an insert clamped tool in accordance with an embodiment of the present invention, in which the same numerals as in the conventional tool are used to designate the same or similar parts in order to avoid repetition of the explanation.

The clamped tool of the present embodiment comprises a tool holder 2 having a recess formed at its forward end and defining an insert-receiving seat 1.

A positioning projection 9 cylindrically shaped is formed integrally with the tool holder 2 so as to protrude from the insert-receiving seat 1 with its axis perpendicular thereto. The positioning projection 9 has an engaging portion 9a at its rearward side, which is formed in such a manner that its surface is positioned precisely in accordance with the size and the shape of the insert 4 which is received on the insert-receiving seat 1.

A throwaway cutting insert 4 with a mounting bore 4a formed therethrough is received on the insert-receiving seat 1. A clamp 7 for pressing the insert 4 against said insert-receiving seat 1 is disposed at a position shifted rearward of the tool holder 2 relative to the positioning projection 9, and a pressing member in the form of a clamp plate 8 for pressing the insert 4 in a direction parallel to the insert-receiving seat 1 is interposed between the clamp 7 and the tool holder 2 with its rear wedge face 8a being held in abutting engagement with a complementary wedge face 7a formed at a rear portion of the clamp 7. The clamp plate 8 is movably set in and along a groove 1a formed on the insert-receiving seat 1. A clamp bolt 6 is inserted through the clamp 7 and the clamp plate 8 and is screwed into the tool holder 2.

When clamping the insert 4 to the tool holder 2, the insert 4 is received on the insert-receiving seat 1 in such a manner that the insert engaging portion 9a of the positioning projection 9, which protrudes from the insert-receiving seat 1, is held in abutting engagement with the mounting bore 4a of the insert 4. Subsequently, the clamp bolt 6 is tightened to cause the clamp 7 to press the insert 4 against the insert-receiving seat 1, and to press the clamp plate 8 forward of the tool to bring the insert engaging portion 5c of the positioning projection 5 into abutting engagement with the mounting bore 4a of the insert 4.

In the foregoing, as the clamp bolt 6 is tightened, the positioning projection 9 is gradually pressed forward of the tool holder 2. Since the positioning projection 9 is formed integrally with the tool holder 2, the position of the surface of the engaging portion 5c does not change during the clamping operation, and hence the cutting edge 4b can be kept at a desired position in a longitudinal direction of the tool.

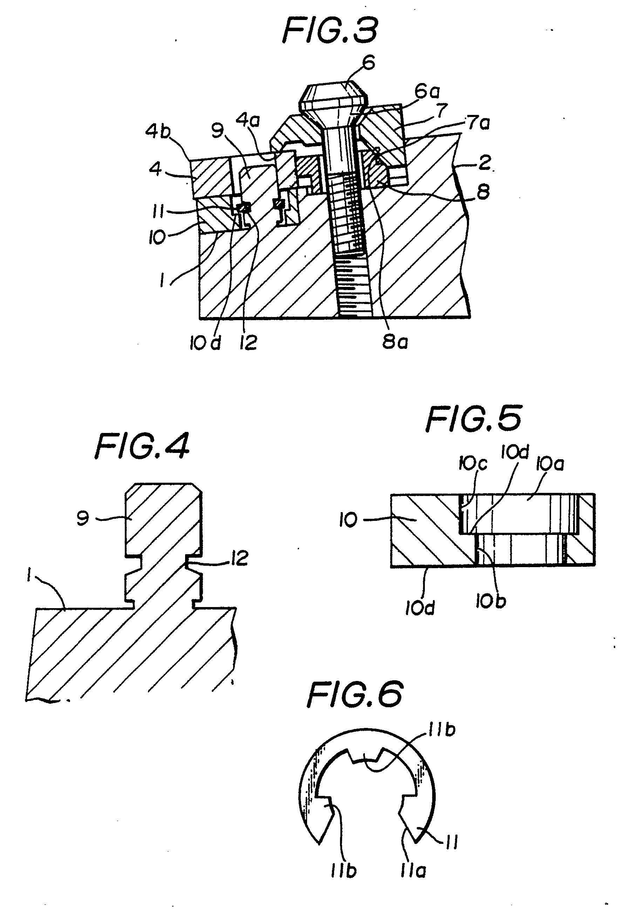

Figs. 3 and 4 depict an insert clamped tool in accordance with another embodiment of the present invention.

As is shown in Fig. 2, this insert clamped tool has an intermediate seat member 10 which is disposed between the insert 4 and the insert-receiving seat 1, and a fixing means in the form of the fixing ring 11 which is arranged between the positioning projection 9 and the intermediate seat member 10. The intermediate seat member 10 has a function as a buffer to prevent direct abutment between the insert-receiving seat 1 and the insert 4, and thus prevents the insert-receiving seat 1 from rapid wearing and degradation. Accordingly, this intermediate seat member 10 is preferably made from material that has similar hardness of the tool holder 2 and the insert 4. The intermediate seat member 10 has a bore 10a formed therethrough, in which the positioning projection 9 is interposed when the insert 4 is held on the insert-receiving seat 1. The bore 10a is formed with two different diameter portions, the smaller diameter portion 10b has larger diameter than the diameter of the positioning projection 9. The step 10d between the larger diameter portion 10C and the smaller diameter portion 10b is defined as an abutment surface.

The positioning projection 9 is formed cylindrically with a groove 12 around its outside surface formed in the circumferential direction. The distance between the groove 12 and the insert-receiving seat 1 corresponds to the axial length of the smaller diameter portion 10b of the intermediate seat member 10.

As shown in Fig. 3, the fixing ring 11 is inserted in the groove 12 so as to secure the intermediate seat member 10 to the insert receiving seat 1. This fixing ring 11 is made from an elastic material such as metal or plastic in a form of ring plate with a slit 11a and several engagement portions 11b projecting inward. The diameter of the circle formed inside the engagement portions 11b is set a little smaller than the diameter of the positioning projection 9.

When fixing the intermediate seat member 10, the intermediate seat member 10 is put on the insert-receiving seat 1 with the smaller diameter portion end 10d facing the insert-receiving seat 1, and the positioning projection 9 interposed in the bore 10a. Then the fixing ring 11 is inserted in the space between the positioning projection 9 and the larger diameter portion 10c of the bore 10a. The fixing ring 11 is forced to stretch elastically outward when set around the positioning projection 9, and is pushed into the bore 10a until the groove 12, where it springs back inward with its engagement portion 11b inserted into the groove 12. Hence, the fixing ring 11 is fixed to the groove 12 with its surface brought in abutment with the step 10d of the intermediate seat member 10. Therefore the fixing ring 11 secures the intermediate seat member 10 to the insert-receiving seat 1 and prevents the seat member 10 from moving out of the seat 1 when, for example, exchanging the insert 4.

The procedure to clamp the insert 4 to the tool holder 2 is the same as described above in the explanation of the first embodiment.

In both embodiments described above, the movement of the insert during clamping can be positively prevented and the insert 4 is kept securely in position, a positioning pin 5 as shown in Fig. 7 is unnecessary, a pin-receiving hole 3 in the tool holder 2 as shown in Fig. 8 is unnecessary, and accurate boring is unnecessary and thus the manufacturing costs are kept low, and the durability of the tool holder 2 is not reduced.

Reference signs in the claims are intended for better understanding and shall not limit the scope.

## Claims

1. An insert clamped tool comprising a tool holder (2) including a recess formed at a forward end thereof so as to define an insert-receiving seat (1), a cutting insert (4) having a mounting bore (4a) formed therethrough and received on said insert-receiving seat (1), and clamp means (6,7,8) arranged on said tool holder (2) for pressing said insert (4) against said insert-receiving seat (1), characterized in that a positioning projection (9) protruding from said insert-receiving seat (1) and having an engaging portion (9a) at one side thereof is integrally formed on said tool holder (2) in such a manner that said engaging portion (9a) is held in abutting engagement with said mounting bore (4a) of said insert (4), and that said clamp means (6,7,8) is arranged on said tool holder (2) for pressing said insert (4) against said engaging portion (9a) of said positioning projection (9).

2. A tool according to claim 1, in which said clamp means comprises a pressing member (8) disposed on said insert-receiving seat (1) so as to be movable toward and away from said insert (4), a clamp (7) arranged on said pressing member (8) for pressing said insert (4) against said insert-receiving seat (1), and a clamp screw (6) screwed into said tool holder (2) for fixedly securing said clamp (7) to said tool holder (2).

3. A tool according to claim 1 or 2, in which an intermediate seat member (10) is disposed between said insert (4) and said insert-receiving seat (1), and fixing means (11) is arranged between said positioning projection (9) and said seat member (11) for securing said intermediate seat member (10) to said insert-receiving seat (1).

4. A tool according to claim 1 or claim 2, in which said engaging portion (9a) of said positioning projection (9) includes a portion of a circular cross-section having an axis perpendicular to said insert-receiving seat (1).

5. A tool according to claim 3, in which said engaging portion (9a) of said positioning projection (9) includes a portion of a circular cross-section having an axis perpendicular to said insert-receiving seat (1).

6. A tool according to claim 3 or claim 5, in which said fixing means (11) comprises an elastic ring disposed around said positioning projection (9).

*FIG.1*

*FIG.2*

*FIG.3*

*FIG.4*

*FIG.5*

*FIG.6*

## FIG.7 (PRIOR ART)

## FIG.8 (PRIOR ART)

## FIG.9 (PRIOR ART)

## FIG.10 (PRIOR ART)